# EUROPEAN PATENT APPLICATION

(11) **EP 2 281 658 A1**
(43) Date of publication of application: **09.02.2011**
(21) Application number: 09729519.0
(22) Date of filing: 30.03.2009
(51) Int. Cl.: B23Q 16/10, B23Q 1/28

(54) **ROTATION-RESISTANCE DEVICE FOR MACHINE TOOL MAIN SHAFT DRIVE**

(30) Priority: 07.04.2008 JP 2008098844
(71) Applicant: Tsudakoma Kogyo Kabushiki Kaisha, Ishikawa 921-8650 (JP)
(72) Inventor: TATSUDA, Yoshinori, Kanazawa-shi Ishikawa 921-8650 (JP)
(74) Representative: Samson & Partner
(86) International application number: PCT/JP2009/056460
(87) International publication number: WO 2009/125687

(57) **Abstract**

When a finishing operation is performed while rotating a workpiece at a main shaft drive of a machine tool, pulsation occurring in a rotation of the main shaft drive is restricted and the rigidity of a main shaft is increased without increasing the size of a bearing. A rotation-resistance device of a main shaft drive in a machine tool has the following structure in the main shaft drive including a main shaft 4, a rotating body 65, and a driving device 6, the main shaft 4 being supported so as to be rotatable with respect to a frame body 2, the rotating body 65 being secured to an end of the main shaft 4, the driving device 6 rotationally driving the rotating body (65). The rotation-resistance device includes a damping device (10) including a damping member, which is provided at the frame body 2 or the rotating body 65 and which includes a resiliently deformable damping section, a pressing-force applying device 66, which applies a pressing force to the damping member by operating fluid, and a damping surface 32, provided at a side of the frame body 2. The damping device 10 causes the pressing force to act upon the damping section to flex the damping section, so that the damping surface 32 and a sliding surface 33 are pressed against each other, and a rotation resistance that allows rotation is applied to the rotating body 65. A low-friction coefficient member 60 is secured to at least one of the damping surface 32 and the sliding surface 33.

## Description

### Technical Field

The present invention relates to a main shaft drive in a machine tool, in which a main shaft, supported so as to be rotatable with respect to a frame body, and a rotationally driven member, which is secured to an end portion of the main shaft, is rotationally driven by a driving device.

### Background Art

One related art regarding the main shaft drive in the machine tool is discussed in Patent Document 1. The main shaft drive in the machine tool in Patent Document 1 is a rotation index table device, and uses, as driving means of the main shaft, a direct drive motor (what is called a "DD motor") that rotationally drives the main shaft without using drive transmission means such as a gear.

In the rotation index table device in the aforementioned Patent Document 1, a clamped/unclamped state of a table is switched by introducing operating fluid. When a piston is constantly urged towards a brake plate by a compression spring and the introduction of the operating fluid is stopped, friction generated by contact between the piston and the brake plate causes the table to stop rotating. In the above-described device, when the table is rotated, a clamp device is set in an operation state, and the piston is moved against the urging force of the compression spring, so that the clamp device is set to an unclamped state.

Accordingly, in a general main shaft drive, when the table is rotated, the clamp device is often set to an unclamped state, and, when a finishing operation is carried out while continuously rotating a workpiece, naturally, the finishing operation is performed while the clamp device is set to an unclamped state.

When the main shaft drive is rotating, it is influenced by variations in load from a cutter that processes the workpiece. Even under a constant processing condition, the load from the cutter that processes the workpiece constantly varies.

When a DD motor is used as driving means of the main shaft, control of the DD motor is carried out while correcting deviation of a rotation angle (rotation amount) of the main shaft drive occurring due to the variations in load from the cutter, on the basis of feedback of the rotation angle (rotation amount) from a rotation detector of the main shaft drive. Since the rotation of the DD motor subject to the control may not satisfactorily follow the deviation, the rotation of the DD motor is not necessarily uniform, as a result of which the DD motor pulsates.

Even when a motor and a speed reducer, such as a gear, are included in the driving means of the main shaft, the variations in load from the cutter causes pulsation to occur in the rotation state of the main shaft in a backlash range.

As a result, the pulsation occurs in the rotation state of the main shaft drive, thereby increasing surface roughness of a finishing surface of the workpiece.

When the clamp device is set to an unclamped state, the rigidity of the main shaft of the main shaft drive primarily depends upon the rigidity of a bearing. Since the rigidity of the bearing largely depends upon compression of the bearing, when the main shaft needs to be rigid, the compression of the bearing is made large. However, in order to withstand the large compression, the bearing itself needs to be large.

However, if the bearing is made large, twisting precision is reduced, thereby reducing index precision. As a result, processing precision is reduced. The larger the diameter of the bearing, the higher its cost, thereby increasing manufacturing costs of the device.
[Patent Document 1] Japanese Unexamined Patent Application Publication No. 2006-95668

### Disclosure of Invention

### Problems to be Solved by the Invention

Therefore, it is an object of the present invention to provide a main shaft drive of a machine tool in which, when a finishing operation is performed while continuously rotating a workpiece at a main shaft drive, pulsation occurring in a rotation state of the main shaft drive is restricted and the rigidity of a main shaft is increased without increasing the size of a bearing.

### Means for Solving the Problems

In view of the above-described problems, according to the present invention, a rotation-resistance device of a main shaft drive in a machine tool has the following structure in the main shaft drive including a rotating body (65) and a driving device (6), the rotating body (65) including a main shaft (4), supported so as to be rotatable with respect to a frame body (2), and a rotationally driven member, which is secured to an end of the main shaft (4), the driving device (6) rotationally driving the rotating body (65). That is, the rotation-resistance device includes a damping device (10) including a damping member, which is provided at the frame body (2) or the rotating body (65) and which includes a resiliently deformable damping section, a pressing-force applying device (66), which applies a pressing force to the damping member by operating fluid, and a damping surface (32), provided at a side of the frame body (2). The damping device (10) applies to the rotating body (65) rotation resistance that allows rotation thereof while the damping surface (32) and a sliding surface (33), provided at a side of the rotating body (65) and facing the damping surface (32), are pressed against each other as a result of the damping section receiving the pressing force and being flexed. A low-friction coefficient member (60) is secured to at least one of the damping surface (32) and the sliding surface (33).

Here, what is called the low-friction coefficient member (60) refers to a member having a friction coefficient that is less than that of a material of the damping surface (32) and the sliding surface (33). Ordinarily, steel or cast iron is often used as the material of the damping surface (32) and the sliding surface (33). Therefore, the low-friction coefficient member (60) is a member having a friction coefficient that is less than that of steel or cast iron. Further, the aforementioned "rotation resistance that allows rotation" refers to rotation resistance that allows the rotating body to rotate by maintaining the rotation state (angular position, speed, etc.) in accordance with the control, when the driving of the driving device (6) is controlled in accordance with a numerical value control program that is set at a controlling device of the machine tool.

It is possible for the main shaft drive to be a rotation index table device (1) for the machine tool that includes a circular table (5) serving as the rotationally driven member to which a workpiece, which is an object that is processed, is mounted, and that rotationally drives the rotating body (65) including the main shaft (4) and the circular table (5) to index the circular table (5) to a set rotation angle, wherein the rotation index table device (1) includes a clamp device (62) that maintains the set rotation angle of the rotating body (65), wherein the clamp device (62) is used as the damping device (10), and wherein the pressing-force applying device (66) selectively applies a first pressing force and a second pressing force to the damping member, the first pressing force causing the rotation resistance to allow the rotation of the rotating body (65), the second pressing force maintaining the set rotation angle without causing the rotation resistance to allow the rotation of the rotating body (65).

It is possible that, at at least one of the damping surface (32) and the sliding surface (33), the low-friction coefficient member (60) be secured to only a portion where the damping surface (32) and the sliding surface (33) contact each other by the pressing force that causes the rotation resistance to allow the rotation of the rotating body (65). Further, the low-friction coefficient member (60) may be a resinous liner bearing member.

It is possible for the damping device (10) to include an annular damping sleeve (31) serving as the damping member interposed between the frame body (2) and the rotating body (65) and provided so as to be incapable of rotating relative to the frame body (2), wherein the damping sleeve (31) has an annular groove (30) and a thin-walled portion (35), the annular groove (30) being provided for forming a fluid pressure chamber (36) to which the operating fluid is supplied, the thin-walled portion (35) serving as the resiliently deformable damping section formed in a portion corresponding to the groove (30) and facing the sliding surface (33), and wherein, when the pressing-force applying device (66) causes the operating fluid to be supplied into the fluid pressure chamber (36), pressure of the operating fluid causes the thin-walled portion (35) to be resiliently deformed in a radial direction towards the sliding surface (33), so that a surface of the thin-walled portion (35) facing the sliding surface (33) presses the sliding surface (33) as the damping surface (32).

It is possible for the damping device (10) to include a fluid pressure chamber (49), a resiliently deformable sliding disc (43), a piston (44), and a damping surface (48), the fluid pressure chamber (49) being formed at the frame body (2) in the vicinity of the rotating body (65), the sliding disc (43) serving as the damping member and being provided so as to be incapable of rotating relative to the rotating body (65), the piston (44) being provided between the fluid pressure chamber (49) and the sliding disc (43) so as to be movable in an axial direction of the rotating body (65), the damping surface (48) facing the sliding disc (43) and being formed at a side of the frame body (2) opposite to the piston (44), wherein, when the pressing-force applying device (66) supplies the operating fluid into the fluid pressure chamber (49), pressure of operating fluid moves the piston (44) in the axial direction, and the piston (44) presses a sliding surface (55) at a side of the sliding disc (43) closer to the piston (44), and wherein the sliding disc (43) is resiliently deformed by the pressing of the piston (44), so that a sliding surface (55) at a side of the sliding disc (43) closer to the damping surface (48) presses the damping surface (48).

### Advantages

Since the rotation resistance device (61) according to the present invention includes the damping device (10) that applies rotation resistance to the rotating body (65) to allow rotation thereof, when a finishing operation is performed while continuously rotating a workpiece at the main shaft drive, variations in load that the main shaft drive receives from a cutter that processes the workpiece can be restricted by the rotation resistance. Since this can restrict pulsation in control of the DD motor (9) and pulsation within a gear backlash range, it is possible to uniformly stabilize the rotation state of the main shaft drive. In addition, since the rigidity of the rotating body (65) at the main shaft drive is shared by the rotation resistance device(61), the rigidity of the rotating body (65) can be increased without increasing the size of the bearing (3). As a result, the surface roughness of a finishing surface of the workpiece can be good. In addition, it is possible to process a workpiece that is larger than that in the related art when a bearing of the same diameter is used, to obtain higher processing precision because a bearing having a smaller diameter can be used, and to reduce manufacturing costs of the main shaft drive for the machine tool.

In addition, in the present invention, since the low-friction coefficient member (60) is secured to at least one of the damping surface (32) and the sliding surface (33), it is possible to restrict seizure and wear of the damping surface (32) and the sliding surface (33) that slide while pressing each other.

Further, the main shaft drive according to the present invention may be applied to the rotation index table device (1) including the clamp device (62) that maintains the set rotation angle of the rotating body (65). In this case, the clamp device (62) is used as the damping device (10), and the pressing-force applying device (66) selectively applies a first pressing force and a second pressing force to the damping member, the first pressing force causing the rotation resistance to allow the rotation of the rotating body (65), the second pressing force maintaining the set rotation angle without causing the rotation resistance to allow the rotation of the rotating body (65). Therefore, the structure of the rotation resistance device (61) can be simplified.

At at least one of the damping surface (32) and the sliding surface (33), the low-friction coefficient member (60) is secured to only a portion where the damping surface (32) and the sliding surface (33) contact each other by the pressing force that causes the rotation resistance to allow the rotation of the rotating body (65). Therefore, by the second pressing force, the damping surface (32) and the sliding surface (33) also contact each other at portions other than the low-friction coefficient member (60), and a strong clamp force is generated by the rotation resistance device (61). Further, since the low-friction coefficient member (60) is formed of a resinous liner bearing member, the low-friction coefficient member (60) can be easily secured to the damping surface (32) or the sliding surface (33), is easily manufactured, slides smoothly, and is not easily peeled off.

### Brief Description of Drawings

[Fig. 1] Fig. 1 is a side view of a first embodiment of a rotation resistance device of a main shaft drive in a machine tool.
[Fig. 2] Fig. 2 is an enlarged view illustrating the first embodiment of the rotation resistance device of the main shaft drive in the machine tool.
[Fig. 3] Fig. 3 is an enlarged view illustrating the first embodiment of the rotation resistance device of the main shaft drive in the machine tool.
[Fig. 4] Fig. 4 is a side view of a second embodiment of a rotation resistance device of a main shaft drive in a machine tool.
[Fig. 5] Fig. 5 is an enlarged view illustrating the second embodiment of the rotation resistance device of the main shaft drive in the machine tool.

### Reference Numerals

- 1: rotation index table device
- 2: frame body
- 3: bearing
- 4: main shaft
- 5: circular table
- 6: driving device
- 7: motor rotor
- 8: motor stator
- 9: DD motor
- 10: damping device
- 11: base section
- 12: mounting bolt
- 13: center hole
- 14: bearing holder
- 15: mounting bolt
- 16: projection
- 16a: hole
- 17: mounting bolt
- 18: cover member
- 19: oil seal
- 20: rotation detector
- 21: detection ring
- 22: detection sensor
- 23: holding section
- 24: mounting bolt
- 25: stator sleeve
- 26: mounting bolt
- 27: mounting bolt
- 28: casing member
- 29: base member
- 30: groove
- 31: damping sleeve
- 31a: damping section
- 31b: flange section
- 32: damping surface
- 33: sliding surface
- 34: seal
- 35: thin-walled portion
- 36: fluid pressure chamber
- 37: mounting bolt
- 38: flow path
- 39: flow path
- 40: port
- 41: fluid supplying device
- 43: sliding disc
- 44: piston
- 45: return disc
- 46: mounting portion
- 47: mounting bolt
- 48: damping surface
- 49: fluid pressure chamber
- 50: piston rod
- 51: mounting bolt
- 52: stopper
- 53: mounting bolt
- 54: groove
- 55: sliding surface
- 60: low-friction coefficient member
- 61: rotation resistance device
- 62: clamp device
- 63: clamp surface
- 64: clamp sleeve
- 64a: clamp section
- 64b: flange section
- 65: rotating body
- 66: pressing-force applying device
- 100: tank
- 101: pneumatic/hydraulic energy source
- 102: check valve
- 103: pressure control valve
- 104: pressure gauge
- 105: selector valve
- 106: pilot operation check valve
- 107: low-pressure supplying section
- 108: throttle valve
- 111: check valve
- 112: pressure control valve
- 113: pressure gauge
- 114: selector valve
- 115: high-pressure supplying section

### Best Modes for Carrying Out the Invention

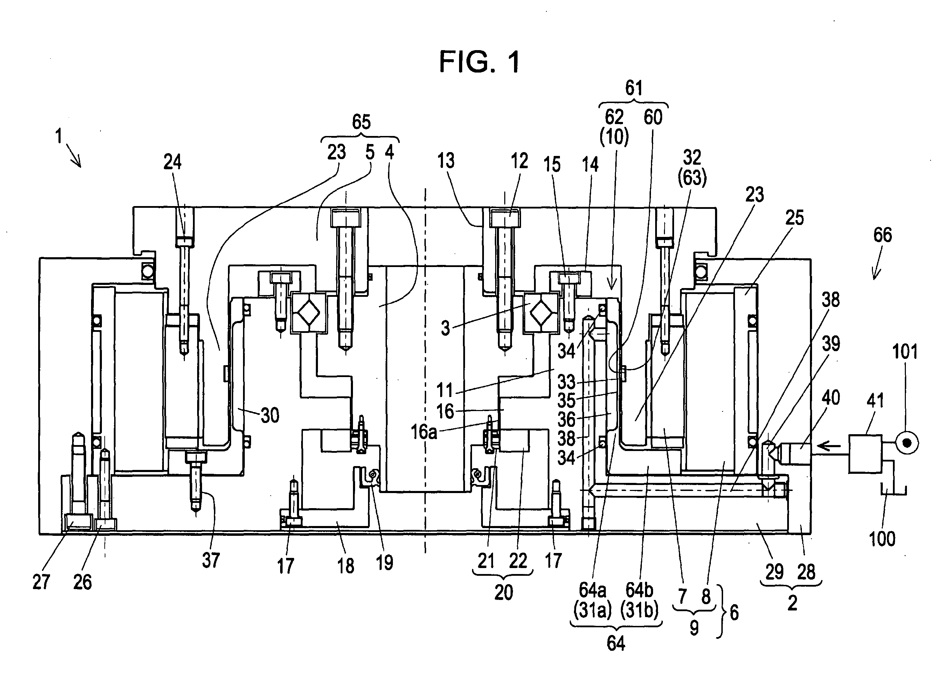

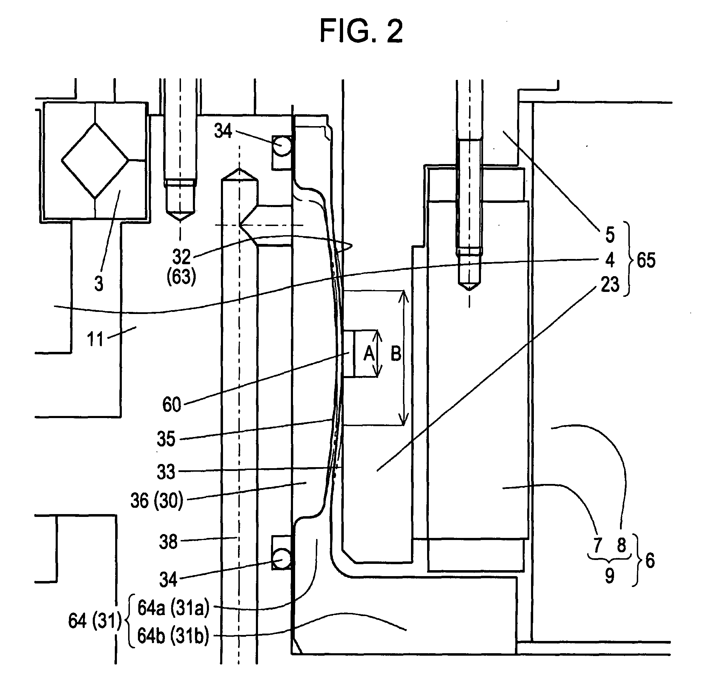

Figs. 1 and 2 show a rotation index table device 1 as a main shaft drive for a machine tool according to the present invention. Fig. 1 is an overall view thereof. In the description below, "axial direction" refers to the direction of an axis of a main shaft 4 that supports a circular table 5 serving as a rotationally driven member, and "radial direction" refers to a radial direction of the main shaft 4, the circular table 5, and a DD motor 9 that are concentrically disposed.

In Fig. 1, the rotation index table device 1 includes a rotating body 65 and a driving device 6. The rotating body 65 includes the main shaft 4, supported by a bearing 3 so as to be rotatable with respect to a frame body 2, and the circular table 5, secured to an end portion of the main shaft 4. The driving device 6 rotationally drives the rotating body 65. A portion of the frame body 2 that becomes a setting surface with respect to the machine tool is a flat surface. The frame body 2 has a cylindrical base section 11 that surrounds the rotating body 65.

In the illustrated embodiment, the frame body 2 is formed by forming a casing member 28 and a base member 29, where the cylindrical base section 11 is formed, as separate members, and combining them with a plurality of mounting bolts 27. However, the cylindrical base section 11 may be formed as a single separate member, and mounted with, for example, a bolt.

The main shaft 4 is inserted into the cylindrical base section 11 in the frame body 2, and is supported by the bearing 3 so as to be rotatable with respect to the frame body 2. The circular table 5 is fitted to one end of the main shaft 4 at a center hole 13. With the circular table 5 being positioned as a result of being fitted, the circular table 5 is mounted to one end portion of the main shaft 4 with a plurality of bolts 12. In the illustrated embodiment, a cylindrical holding section 23 is integrally formed with the circular table 5 so as to extend axially from a side opposite to a workpiece placement end surface (upper surface in Fig. 1) of the circular table 5. The holding section 23 surrounds the base section 11.

An inner ring portion of the bearing 3 is fitted to a bearing stepped portion at the outer periphery of the main shaft 4, and is sandwiched by a surface of the bearing stepped portion of the main shaft 4 and a surface surrounding the center hole 13 at the circular table 5. An outer ring portion of the bearing 3 is placed on a bearing stepped portion at the inner periphery of the cylindrical base section 11, and is secured with an annular bearing holder 14 mounted to an end surface of the base section 11 with a mounting bolt 15. Accordingly, the main shaft 4 and the circular table 5, constituting the rotating body 65, are supported by the bearing 3 so as to be rotatable with respect to the frame body 2. Although, in the illustrated embodiment, the main shaft 4 is supported by one bearing 3 so as to be rotatable with respect to the base section 11 at the frame body 2, two or more of the bearings 3 may be combined between the main shaft 4 and the cylindrical base section 11.

The circular table 5 is mounted to one end of the main shaft 4. The other end of the main shaft 4 is inserted into a hole 16a of a disc-shaped projection 16, formed at the inner peripheral surface of the base section 11, and projects from the hole 16a. The rotation angle (rotation amount) of the main shaft 4 is detected by a rotation detector 20 including a detection ring 21, provided at the projecting portion of the main shaft 4, and a detection sensor 22, provided at the projection 16 at the base section 11. A space at the outer periphery of the shaft 4 at the other end of the main shaft 4 is covered by a cover member 18, mounted to the base section 11 with a bolt 17, and an oil seal 19, held by the cover member 18 and contacting the outer periphery of an end portion of the main shaft 4.

The driving device 6 includes the inner-rotor-type DD motor 9. The DD motor 9 is connected to a controlling device of the machine tool (not shown). The DD motor 9 is concentrically disposed with respect to the axis of the main shaft 4. The DD motor 9. includes a motor rotor 7, provided so as to be incapable of rotating relative to the main shaft 4, and a motor stator 8, disposed so that its inner peripheral surface faces the outer peripheral surface of the motor rotor 7 with a slight space therebetween and so as to be incapable of rotating relative to the casing member 28 of the frame body 2.

While the motor rotor 7 is fitted to the outer peripheral surface of the holding section 23 at the circular table 5, the motor rotor 7 is mounted to the circular table 5 with a mounting bolt 24 inserted from a circular-table-5 side. Accordingly, at a position that is separated from the main shaft 4 in a radial direction, the motor rotor 7 is mounted to the circular table 5 by the holding section 23 integrated to the circular table 5. The motor rotor 7 is in a state in which it is incapable of rotating relative to the main shaft 4 to which the circular table 5 is secured.

Although, in Fig. 1, the holding section 23 is integrated to the circular table 5, it is possible to form the holding section 23 separately from the circular table 5, and secure the holding section 23 to the circular table 5. The holding section 23 may be formed integrally with the main shaft 4, or may be formed as a separate member and secured to the main shaft 4.

On the other hand, the motor stator 8 is mounted to the frame body 2 so that its inner peripheral surface faces the outer peripheral surface of the motor rotor 7 and so that a slight gap is formed between the outer peripheral surface of the motor rotor 7 and the inner peripheral surface of the motor stator 8. In the illustrated embodiment, the motor stator 8 is fitted to the inner peripheral surface of a stator sleeve 25, fitted to the inner peripheral surface of the casing member 28 at the frame body 2, so as to be incapable of rotating relative to the stator sleeve 25. In addition, the stator sleeve 25 is mounted to the frame body 2 with a mounting bolt 26 inserted from a base-member-29 side of the frame body 2. Therefore, the motor stator 8 is in a state in which it is incapable of rotating relative to the frame body 2 in the frame body 2.

In addition, the rotation index table device 1 shown in Fig. 1 includes a clamp device 62 which maintains an indexed rotation angle of the rotating body 65 (main shaft 4) in the frame body 2. In the illustrated embodiment, the clamp device 62 is a clamp-sleeve-type clamp device that causes a damping force to act upon the rotating body 65 by a clamp sleeve 64 serving as a clamp member. The clamp sleeve 64 has a cylindrical clamp section 64a and a flange section 64b. The clamp section 64a is disposed between the holding section 23 at the circular table 5 and the base section 11 at the frame body 2. The flange section 64b extends radially continuously from the clamp section 64a. The clamp section 64a is fitted to the outer side of the base section 11, and is mounted to the frame body 2 with a mounting bolt 37 at the flange section 64b.

At the clamp device 62, the clamp section 64a of the clamp sleeve 64 is disposed so as to face and so as be in a non-contact state with respect to the inner peripheral surface of the holding section 23 serving as a sliding surface 33, and is in close contact with the outer peripheral surface of the base section 11 with two seals 34 being interposed therebetween. In the clamp sleeve 64, a groove 30 is formed in the inner peripheral surface of the clamp section 64a, and a portion corresponding to the groove 30 is a thin-walled portion 35. A space surrounded by the inner surface of the thin-walled portion 35 and the outer peripheral surface of the base section 11 is a fluid pressure chamber 36 to which an operating fluid (such as pressure oil) for causing a pressing force to act upon the thin-walled portion 35 is supplied. Therefore, the fluid pressure chamber 36 is connected to a fluid supplying device 41 through a flow path 38, formed in the base member 29 at the frame body 2, and a flow path 39 and a port 40, formed in the casing member 28.

In the rotation index table device 1 shown in Fig. 1, the clamp device 62 is used as a damping device 10 of a rotation-resistance device according to the present invention, that is, a rotation-resistance device 61 that applies rotation resistance to the rotating body 65 to allow rotation thereof. Therefore, the clamp sleeve 64 corresponds to a damping sleeve 31 serving as a damping member. The thin-walled portion 35 of the cylindrical clamp section 64a corresponds to a resiliently deformable damping section 31a. Further, the flow paths 38a and 39, the port 40, and the fluid supplying device 41 correspond to a pressing-force applying device 66.

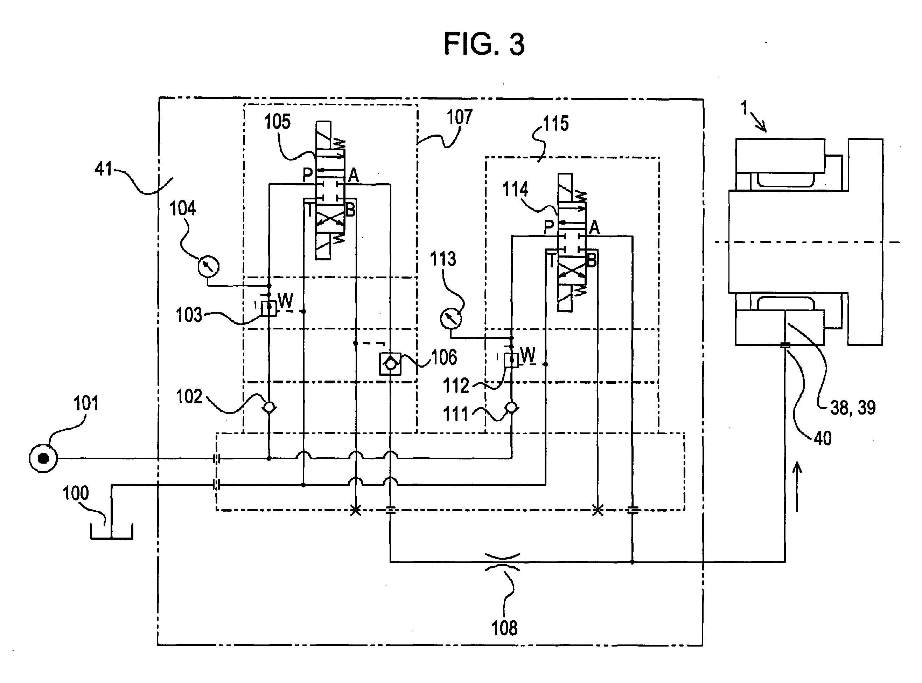

Fig. 3 schematically shows a pressure supplying circuit in the fluid supplying device 41 included in the pressing-force applying device 66. The fluid supplying device 41 is an open circuit whose one side is connected to the port 40 and whose other side is connected to a hydraulic (or pneumatic) source 101 and a tank 100. The fluid supplying device 41 includes a low-pressure supplying section 107 and a high-pressure supplying section 115. A throttle valve 108 for preventing surge pressure from the low-pressure supplying section 107 is provided at a pipe between the low-pressure supplying section 107 and the port 40.

The low-pressure supplying section 107 includes a check valve 102, a pressure control valve 103, a pressure gauge 104, a selector valve 105, and a pilot operation check valve 106 that prevents reverse flow of operating fluid from the high-pressure supplying section 115. The high-pressure supplying section 115 includes a check valve 111, a pressure control valve 112, a pressure gauge 113, and a selector valve 114. The pressure control valve 103 adjusts the pressure of operating fluid supplied from the low-pressure supplying section 107 so that pressing force acting upon the clamp sleeve 64 (damping sleeve 31) by the pressure becomes a first pressing force that causes the rotation resistance applied to the rotating body 65 to allow the rotation of the rotating body 65. The pressure control valve 112 adjusts the pressure of the operating fluid supplied from the high-pressure supplying section 115 so that pressing force acting upon the damping device 10 by the pressure becomes a second pressing force that prevents the rotation resistance applied to the rotating body from allowing the rotation of the rotating body 65 and maintains the set rotation angle.

The selector valve 105 and the selector valve 114 are each a 4-port, 3-position all port block spring center electromagnetic operating valve, and are connected to the controlling device of the machine tool. By operating the selector valve 105 and the selector valve 114, the controlling device of the machine tool switches between a state in which the port 40 is connected to the hydraulic source 101 or the tank 100 through the low-pressure supplying section 106, a state in which the port 40 is connected to the hydraulic source 101 or the tank 100 through the high-pressure supplying section 115, and a state in which the port 40 is not connected to the hydraulic source 101 or the tank 100. The pressures of the operating fluids supplied from the selector valve 105 of the low-pressure supplying section 105 and the selector valve 112 of the high-pressure supplying section 115 in the fluid supplying device 41 act upon the fluid pressure chamber 36 through the operating fluids in the port 40 and the flow paths 38 and 39.

Further, in the rotation index table device 1, as shown in detail in Fig. 2, a low-friction coefficient member 60 is secured to the sliding surface 33 at the inner peripheral surface of the holding section 23. As mentioned above, the low-friction coefficient member in the present invention refers to a member whose friction coefficient is less than that of a material of a portion including the damping surface and the sliding surface to which the low-friction coefficient member is secured (in the embodiment, the damping section 23 and the clamp section 64a). That is, since, in general, steel or cast iron is often used as the material of the holding section 23 integrated to the circular table 5 and the clamp section 64a of the clamp sleeve 64 serving as the damping member (damping sleeve 31), a member formed of a material having a friction coefficient that is less than those of steel and cast iron is used as the low-friction coefficient member. Examples of such a member are resinous line bearing material and gunmetal.

In the illustrated embodiment, the low-friction coefficient member 60 is secured to only a portion of a surface that becomes the sliding surface 33 rather than the entire sliding surface 33. Specifically, a range in which the low-friction coefficient member 60 is secured corresponds to a portion in which, when the pressing-force applying device 66 causes the first pressing force to act upon the clamp sleeve 31 by the pressure of the operating fluid, the thin-walled portion 35 is flexed by an amount corresponding to the first pressing force and the damping surface 32 and the sliding surface 33 contact each other by the flexing (a portion indicated by a range A in Fig. 2).

Next, the operation of the rotation index table device 1 shown in Fig. 1 is described. First, in the rotation index table device 1, when the circular table 5 is to be rotationally driven, the DD motor 9 is excited by control performed by the controlling device of the machine tool. Rotating magnetic field generated by the excitation causes the motor rotor 7 to rotate along with the main shaft 4 and the circular table 5. The rotation angle (rotation amount) of the circular table 5 at this time is detected by the rotation detector 20.

When a workpiece on the circular 5 is processed in a state in which the rotating body 65 (circular table 5) is rotated by a preset rotation angle and an angular position is indexed, the rotation index table device 1 holds the rotating body 65 at the indexed angular position by the clamp device 62 so that the rotating body 65 is incapable of rotating. More specifically, after indexing the angular position of the rotating body 65 by driving the DD motor 9, the controlling device of the machine tool sets the selector valve 105 of the low-pressure supplying section 107 at an all port block position (center position) in the pressure supplying circuit in the fluid supplying device 41 shown in Fig. 3, and sets the selector valve 114 of the high-pressure supplying section 115 at a PA, BT connection position (operation position) in the pressure supplying circuit. Accordingly, the operating fluid is supplied as high-pressure operating fluid towards the port 40 from the selector valve 114 through the check valve 111, the pressure control valve 112, the pressure gauge 113 of the high-pressure supplying section 115. The pilot operation check valve 106 prevents reverse flow of the operating fluid from the high-pressure supplying section 115 to the low-pressure supplying section 107.

As a result, the pressure of the high-pressure operating fluid adjusted by the pressure control valve 112 acts upon the fluid pressure chamber 36, and the second pressing force acts upon the inner wall surface of the thin-walled portion 35 of the clamp sleeve 64. As shown by a two-dot chain line in Fig. 2, this causes the thin-walled portion 35 to become deformed (flexed) in a diameter increasing direction, and the clamp surface 63 to contact the sliding surface 33 in an illustrated range B and to press the sliding surface 33.

The illustrated range B is a range that is wider than the portion where the low-friction coefficient member 60 is secured in an axial direction. Therefore, since the clamp surface 63 and the sliding surface 33 also contact each other at portions other where the low-friction coefficient member 60 is secured, friction resistance generated between the clamp surface 63 and the sliding surface 33 at this time becomes a value based on the friction coefficient of the material of the clamp sleeve 64 and the material of the holding section 23. Therefore, the friction force between the clamp surface 63 and the sliding surface 33 becomes large, and the rotation resistance that the clamp sleeve 64 applies to the rotating body 65 becomes a sufficient rotation resistance that does not allow the rotation of the rotating body 65. Consequently, the clamp device 62 functions as a device that maintains the angular position of the rotating body 65 of the rotation index table device 1.

In the pressure supplying circuit in the fluid supplying device 41 shown in Fig. 3, when the controlling device sets the selector valve 105 and the selector valve 114 at the PB, At connection positions, the pressures of the operating fluids no longer act upon the fluid pressure chamber 36 through the tank 100, thereby reducing the internal pressure of the fluid pressure chamber 36. Since the pressing forces resulting from the pressures of the operating fluids no longer act upon the thin-walled portion 35, the clamp surface 63 separates from the sliding surface 33. As a result, the clamp device of the rotation index table device 1 is set in an unclamped state.

In contrast, when a workpiece is to be finished while rotating the circular table 5 in the rotation index table device 1, in the pressure supplying circuit in the fluid supplying device 41 shown in Fig. 3, the controlling device of the machine tool causes the selector valve 105 of the low-pressure supplying section 107 to be set at the PA, BT connection position (operation position), and the selector valve 114 of the high-pressure supplying section 115 is set at the all port block position (center position). This causes the operating fluid to be supplied as low-pressure operating fluid towards the port 40 from the selector valve 105 through the check valve 102, the pressure control valve 103, the pressure gauge 104 of the low-pressure supplying section 107. As a result, the pressure of the low-pressure operating fluid adjusted by the pressure control valve 103 acts upon the fluid pressure chamber 36, and the first pressing force acts upon an inner wall surface of the thin-walled portion 35 of the damping sleeve 31 (clamp sleeve 64) serving as the damping member.

At this time, as shown by a solid line in Fig. 2, similarly to the case in which the first pressing force acts upon the thin-walled portion 35 at the damping sleeve 31, and the angular position of the aforementioned rotating body 65 is maintained, the thin-walled portion 35 at the damping sleeve 31 is deformed (flexed) in the diameter increasing direction, and the damping surface 32 (clamp surface 63), which is the outer peripheral surface of the thin-walled portion 35, is made to contact the sliding surface 33.

The range of contact of the damping surface 32 and the sliding surface 33 at this time corresponds to the range A (< B) shown in Fig. 2, and corresponds to a portion of the sliding surface 33 to which the low-friction coefficient member 60 is secured. That is, the flexing amount of the thin-walled portion 35 is small when the first pressing force acts upon the damping sleeve 31 as a result of the low-pressure operating fluid supplied from the low-pressure supplying section 107 of the fluid supplying device 41 than when the second pressing force resulting from the high-pressure operating fluid supplied from the high-pressure supplying section 115 acts. As a result, the range in which the damping surface 32 and the sliding surface 33 contact each other becomes smaller (narrower) in the axial direction when the first pressing force acts upon the sliding sleeve 31 than when the second pressing force acts, that is, when the angular position of the rotating body 65 is maintained. In addition, in the illustrated embodiment, the low-friction coefficient member 60 is secured at a sliding-surface-33 side of the contact range.

Accordingly, when the workpiece is being finished while rotating the circular table 5, the pressing force acting upon the damping sleeve 31 becomes pressure in correspondence with the low-pressure operating fluid supplied from the low-pressure supplying section 107, and becomes the first pressing force that causes the rotation resistance applied to the rotating body 65 by the pressure to allow the rotation of the rotating body 65. Therefore, the friction force between the damping surface 32 and the holding section 23 (sliding surface 33) is smaller than when the angular position of the rotating body 65 is maintained, the clamp device 62 functions as the damping device 10 of the rotation-resistance device 61 that applies a rotation resistance to the rotating body 65 of the rotation index table device 1 to allow rotation thereof, and the rotation index table 1 rotates in a partially clamped state.

Since, by the rotation resistance, variations in load from a cutter that processes a workpiece to the rotation index table device 1 when the workpiece is being finished while rotating the workpiece are restricted. Therefore, a deviation in the rotation angle (rotation amount) of the rotation index table device generated by the variations in load from the cutter can be further reduced. This makes it possible to restrict pulsation in the control of the DD motor 9 performed while correcting the deviation of the rotation angle (rotation amount). Therefore, it is possible to uniformly stabilize the rotation state of the rotation index table device 1. Since the rigidity of the rotating body 65 at the rotation index table device 1 is shared by the rotation resistance device 61, the rigidity of the rotating body 65 can be increased without increasing the size of the bearing 3. As a result, the surface roughness of a finishing surface of the workpiece when the workpiece is being finished while rotating the workpiece can be good. In addition, it is possible to process a workpiece that is larger than that in the related art when a bearing of the same diameter is used, to obtain higher processing precision because a bearing having a smaller diameter can be used, and to reduce manufacturing costs of the rotation index table device 1 for the machine tool.

Moreover, the low-friction coefficient member 60 is secured to the sliding surface 33, and the damping surface 32 and the sliding surface 33 are in contact with and are pressed against each other only at a portion where the low-friction coefficient member 60 is interposed. Therefore, when the rotating body 65 is rotated while a damping force acts thereupon by the rotation resistance, it is possible to restrict heating, seizure, and wear occurring when the damping surface 32 and the sliding surface 33 slide against each other. Friction resistance generated between the damping surface 32 and the sliding surface 33 becomes a value based on the friction coefficient of the material of the clamp sleeve 64 and the material of the low-friction coefficient member 6, and the friction force between the damping surface 32 and the sliding surface 33 becomes even smaller. Therefore, adjustment of the pressure control valve 103 so that the first pressing force is provided is further facilitated.

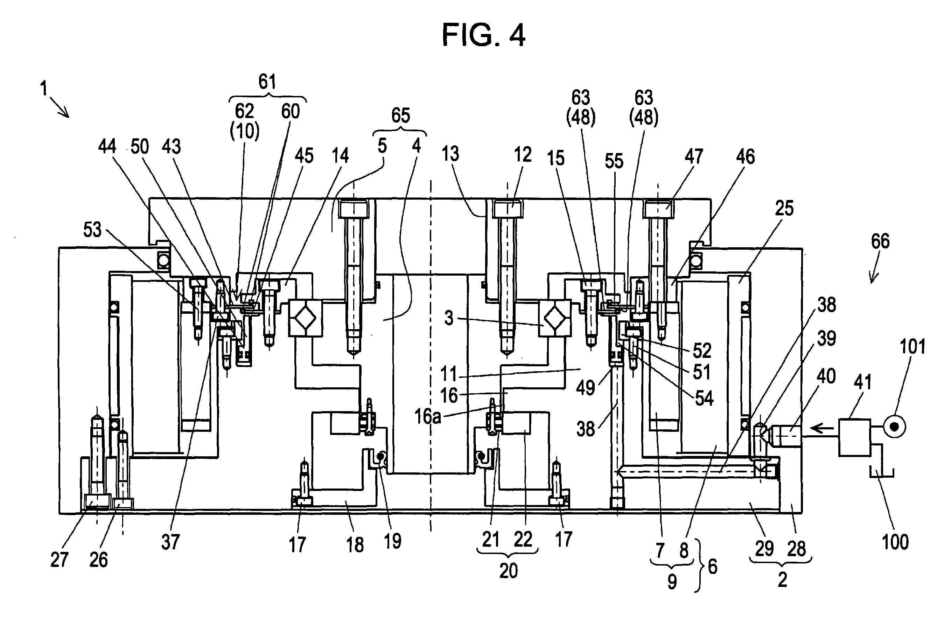

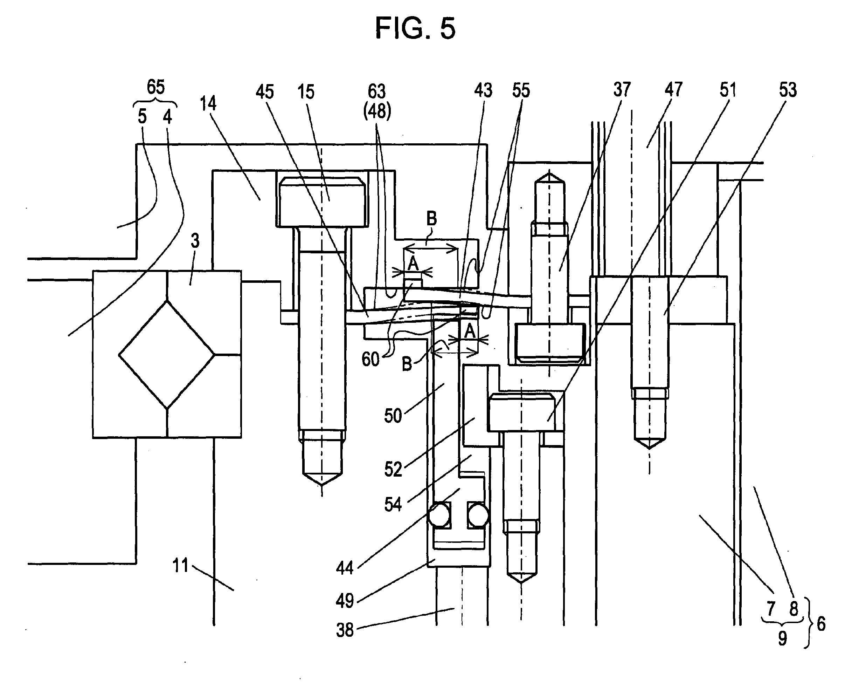

Next, a rotation index table device 1 according to another embodiment of the present invention will be described with reference to Figs. 4 and 5. Fig. 4 is an overall view thereof, and shows an exemplary structure in which a disc-type clamp device is used as a clamp device 62 of the rotation index table device 1. The structural components other than the clamp device 62 is substantially the same as those of the embodiment shown in Figs. 1 and 2. Therefore, the components common to those shown in Figs. 1 and 2 are given the same reference numerals in Figs. 4 and 5, and these components will not be described below.

In Fig. 4, the clamp device 62 includes, for example, a sliding disc 43, an annular piston 44, and a return disc 45. The sliding disc 43 is mounted to an outer-peripheral-side mounting portion with a mounting bolt 37. A mounting portion 46 is mounted to a circular table 5 with a mounting bolt 47. One surface at an inner peripheral side of the sliding disc 43 (a circular-table-5-side surface) is not in contact with and faces a sliding-disc-43-side surface of a bearing holder 14, which becomes a clamp surface 63. The other surface at the inner peripheral side of the sliding disc 43 (a frame-body-2-side surface) is not in contact with and faces a surface of the return disc 45, which becomes another clamp surface 63.

According to the embodiment shown in Fig. 4, the mounting portion 46 mounted to the circular table 5. In addition, a motor rotor 7 is mounted to the mounting portion 46 with a mounting bolt 53, and is integrated to the circular table 5. The annular return disc 45 is mounted to a base section 11 with a mounting bolt 15 along with the bearing holder 14.

A piston 44 is accommodated in an annular groove 54, formed in the base section 11, so as to be movable in an axial direction. A space surrounded by the groove 54 and an end surface at a side opposite to the sliding disc 43 of the piston 44 becomes a fluid pressure chamber 49 to which operating fluid for displacing the piston 44 is supplied.
In addition, a flow path 38, formed at the base section 11, is connected to the fluid pressure chamber 49, at a position facing the end surface at the side opposite to the sliding disc 43 of the piston 44. Further, the flow path 38 is connected to a fluid supplying device 41 through a port 40 and a flow path 39, formed in a casing member 28.

A piston rod 50 integrated to the piston 44 faces the other surface at the inner peripheral side of the sliding disc 43 (the frame-body-2-side surface) with the return disc 45 being disposed therebetween. The sliding disc 43 and the return disc 45 are each formed of a resilient material, and steel or cast iron is ordinarily used as the resilient material.

Further, a stopper 52 is mounted to the base section 11 with a mounting bolt 51 so as to face a portion of the piston 44. The stopper 52 prevents the piston 44 from becoming displaced, and, at the same time, guides an axial movement of the piston rod 50.

In addition, in the rotation index table device 1 shown in Fig. 4, the clamp device 62 serves as the damping device 10 of the rotation-resistance device 61 that applies rotation resistance to the rotating body 65 to allow rotation of the rotating body 65. In this embodiment, the sliding disc 43 corresponds to a damping member. In addition, a sliding-disc-43-side surface of the return disc 45 and a sliding-disc-43-side surface of the bearing holder 14 become clamp surfaces 63 (damping surfaces 48), and both surfaces of the sliding disc 43 become sliding surfaces 55.

Further, in the rotation index table device 1, as shown in detail in Fig. 5, low-friction coefficient members 60 are secured to the clamp surfaces 63, which correspond to the damping surfaces 48 disposed at two locations.

In the illustrated embodiment, the low-friction coefficient members 60 are secured not to the entire damping surfaces 43, but to only portions thereof. Ranges in which the low-friction coefficient members 60 are secured correspond to portions in which, when a pressing-force applying device 66 causes the first pressing force to act upon the piston 44 by the pressure of the operating fluid, the return disc 45 and the sliding disc 43 are flexed by an amount corresponding to the first pressing force and the damping surfaces 48 and the sliding surfaces 55 contact each other by the flexing (portions indicated by ranges A in Fig. 5).

Next, the operation of the rotation index table device 1 shown in Fig. 4 will be described. First, when processing is performed while an angular position of the rotating body 65 (the circular table 5) is indexed, the angular position of the rotating body 65 is indexed by driving a DD motor 9. Then, as in the previous embodiment, the fluid supplying device 41 in the pressing-force applying device 66 is controlled by a controlling device of a machine tool, and high-pressure operating fluid is supplied to a port 40. Then, as a result, pressure of the high-pressure operating fluid acts upon the fluid pressure chamber 49, and the second pressing force acts upon the piston 44 and the piston rod 50.

As shown by a two-dot chain line in Fig. 5, the piston 44 and the piston rod 50 receive the second pressing force, and are displaced towards the sliding disc 43. An end of the piston 50 presses the return disc 45, and the return disc 45 is flexed and deformed, and comes into contact with and presses the sliding disc 43. Then, the sliding disc 43 receives a pressing force from the return disc 45; is, thus, flexed and deformed; and comes into contact with the clamp surfaces 63 serving as the damping surfaces 48 of the bearing holder 14. At this time, the clamp surfaces 63 and sliding surfaces 55 of the sliding disc 43 contact each other in illustrated ranges B.

The illustrated ranges B are ranges that are wider than the portions where the low-friction coefficient members 60 are secured in a radial direction. Therefore, since the clamp surfaces 63 and the sliding surfaces 33 also contact each other at portions other where the low-friction coefficient members 60 are secured, friction resistance generated between the clamp surfaces 63 and the sliding surfaces 48 at this time becomes a value based on the friction coefficients of the materials of the return disc 45 and the bearing holder 14 and that of the material of the sliding disc 43. Therefore, the friction force between the clamp surfaces 63 and the sliding surfaces 33 becomes large, and the rotation resistance that the clamp device 62 applies to the rotating body 65 becomes a sufficient rotation resistance that does not allow the rotation of the rotating body 65. Consequently, the clamp device 62 functions as a device that maintains the angular position of the rotating body 65 of the rotation index table device 1.

When, by the controlling device of the machine tool, the pressure of the operating fluid no longer acts upon the fluid pressure chamber 49, the internal pressure of the fluid pressure chamber 49 is reduced, and the pressing force resulting from the operating fluid no longer acts upon the piston 44 and the piston rod 50. Therefore, the piston 44 and the piston 50 are returned to a withdrawal position by a resilient force of the return disc 45. This causes the clamp surfaces 63 and the sliding surfaces 55 to separate from each other, so that the clamp device 62 of the rotation index table device 1 is set in an unclamped state.

When a workpiece is being finished while rotating the circular table 5 in the rotation index table device 1, the fluid supplying device 41 in the pressing-force applying device 66 is controlled by the controlling device of the machine tool as in the previous embodiment, to supply low-pressure operating fluid to the port 40. As a result, pressure of high-pressure operating fluid acts upon the fluid pressure chamber 49, and the second pressing force acts upon the piston 44 and the piston rod 50.

Therefore, as shown by a solid line in Fig. 5, the piston 44 and the piston rod 50 receive the first pressing force, and are displaced towards the sliding disc 43. An end of the piston rod 50 presses the return disc 45, so that the return disc 45 is flexed and deformed, and contacts and presses the sliding disc 43. The sliding disc 43 receives the pressing force from the return disc 45, as a result of which the sliding disc 43 is flexed and deformed, and contacts the clamp surfaces 63 serving as the damping surfaces 48 of the bearing holder 14.

Contact ranges of the damping surfaces 48 and the sliding surfaces 55 at this time are the ranges A (< B) shown in Fig. 5, and correspond to portions of the damping surfaces 48 to which the low-friction coefficient members 60 are secured. That is, the flexing amount of the return disc 45 and that of the sliding disc 43 are smaller when the first pressing force is made to act upon the return disc 45 and the sliding disc 43 by the low-pressure operating fluid supplied at the low-pressure supplying section 107 of the fluid supplying device 41 than when the second pressing force is made to act thereupon by the high-pressure operating fluid supplied from the high-pressure supplying section 115. As a result, the contact ranges of the damping surfaces 48 and the sliding surfaces 55 are radially smaller (narrower) when the first pressing force acts upon the return disc 45 and the sliding disc 43 than when the second pressing force is made to act thereupon, that is, when the angular position of the rotating body 65 is maintained. In the illustrated embodiment, the low-friction coefficient members 60 are secured to the damping-surface-48 aide of the contact ranges.

Accordingly, in this case, the pressure control valve 103 adjusts the pressure of the operating fluid supplied from the low-pressure supplying section 107 so that pressing force that acts upon the sliding disc 43 by the pressure becomes the first pressing force that causes the rotation resistance applied to the rotating body 65 to allow the rotation of the rotating body 65. Therefore, the friction force of the return disc 45 and the damping surfaces 48 (clamp surfaces 63) of the bearing holder 14 with respect to the sliding disc 43 (sliding surfaces) 55 is smaller than when the angular position of the rotating body 65 is maintained, the clamp device 62 functions as the damping device 10 of the rotation-resistance device 61 that applies a rotation resistance to the rotating body 65 of the rotation index table device 1 to allow rotation thereof, and the rotation index table 1 rotates in a partially clamped state.

Further, the low-friction coefficient members 60 are secured to the damping surfaces 48, and the return disc 45 and the damping surfaces 48 (clamp surfaces 63) are in contact with and pressed against the sliding disc 43 (sliding surfaces 55) only at portions where the low-friction coefficient members 60 are interposed. Therefore, heat, seizure, and wear generated by the friction that is generated as a result of sliding the damping surfaces 48 and the sliding surfaces 55 can be reduced. In addition, friction resistance generated between the damping surfaces 32 (clamp surfaces 63) and the sliding disc 43 (sliding surfaces 55) becomes a value based on the friction coefficient of the material of the sliding disc 43 and those of the material of the low-friction coefficient members 60, and the friction force between the damping surfaces 48 and the sliding surfaces 55 becomes even smaller. Therefore, adjustment of the pressure control valve 103 so that the first pressing force is provided is further facilitated.

Although, in the present invention, the rotation index table device 1 in which the DD motor 9 serves as the driving device 6 is primarily described, the driving device 6 need not be the DD motor 9. The driving device 6 may include a motor and a speed reducer, such as a gear. Alternatively, an index device other than a rotation index table device, or a main shaft drive of a machine tool that is a device other than an index device may be used. More specifically, an index device of a universal head of a machine tool or a workpiece main-shaft device of a machine tool for combined machining may also be used.

In addition, although, in the present invention, the damping device of the rotation-resistance device is used as the clamp device, the damping device may be formed separately from the clamp device and need not function as the clamp device. Alternatively, only the damping device may be provided without providing the clamp device. Further, although, in the present invention, the low-friction coefficient members are primarily described as being secured to the portions where the damping surfaces and the sliding surfaces contact each other, they may be secured to ranges that are wider than the portions where the damping surfaces and the sliding surfaces contact each other, or may be secured to ranges that are narrower than the portions where damping surfaces and the sliding surfaces contact each other.

### Industrial Applicability

The rotation-resistance device of the main shaft drive in a machine tool according to the present invention is mounted to the machine tool as a device mounted to the machine tool or as a device that is attached later to various machine tools.

## Claims

1. A rotation-resistance device of a main shaft drive in a machine tool, the main shaft drive in the machine tool including a rotating body (65) and a driving device (6), the rotating body (65) including a main shaft (4), supported so as to be rotatable with respect to a frame body (2), and a rotationally driven member, which is secured to an end of the main shaft (4), the driving device (6) rotationally driving the rotating body (65), the rotation-resistance device including:
a damping device (10) including a damping member, which is provided at the frame body (2) or the rotating body (65) and which includes a resiliently deformable damping section, a pressing-force applying device (66), which applies a pressing force to the damping member by operating fluid, and a damping surface (32), provided at a side of the frame body (2), the damping device (10) applying to the rotating body (65) rotation resistance that allows rotation thereof while the damping surface (32) and a sliding surface (33), provided at a side of the rotating body (65) and facing the damping surface (32), are pressed against each other as a result of the damping section receiving the pressing force and being flexed,
wherein a low-friction coefficient member (60) is secured to at least one of the damping surface (32) and the sliding surface (33).

2. The rotation-resistance device of the main shaft drive in the machine tool according to Claim 1, wherein the main shaft drive is a rotation index table device (1) for the machine tool that includes a circular table (5) serving as the rotationally driven member to which a workpiece, which is an object that is processed, is mounted, and that rotationally drives the rotating body (65) including the main shaft (4) and the circular table (5) to index the circular table (5) to a set rotation angle,
wherein the rotation index table device (1) includes a clamp device (62) that maintains the set rotation angle of the rotating body (65),
wherein the clamp device (62) is used as the damping device (10), and
wherein the pressing-force applying device (66) selectively applies a first pressing force and a second pressing force to the damping member, the first pressing force causing the rotation resistance to allow the rotation of the rotating body (65), the second pressing force maintaining the set rotation angle without causing the rotation resistance to allow the rotation of the rotating body (65).

3. The rotation-resistance device of the main shaft drive in the machine tool according to Claim 1, wherein, at at least one of the damping surface (32) and the sliding surface (33), the low-friction coefficient member (60) is secured to only a portion where the damping surface (32) and the sliding surface (33) contact each other by the pressing force that causes the rotation resistance to allow the rotation of the rotating body (65).

4. The rotation-resistance device of the main shaft drive in the machine tool according to Claim 1, wherein the low-friction coefficient member (60) is a resinous liner bearing member.

5. The rotation-resistance device of the main shaft drive in the machine tool according to Claim 1, wherein the damping device (10) includes an annular damping sleeve (31) serving as the damping member interposed between the frame body (2) and the rotating body (65) and provided so as to be incapable of rotating relative to the frame body (2),
wherein the damping sleeve (31) has an annular groove (30) and a thin-walled portion (35), the annular groove (30) being provided for forming a fluid pressure chamber (36) to which the operating fluid is supplied, the thin-walled portion (35) serving as the resiliently deformable damping section formed in a portion corresponding to the groove (30) and facing the sliding surface (33), and
wherein, when the pressing-force applying device (66) causes the operating fluid to be supplied into the fluid pressure chamber (36), pressure of the operating fluid causes the thin-walled portion (35) to be resiliently deformed in a radial direction towards the sliding surface (33), so that a surface of the thin-walled portion (35) facing the sliding surface (33) presses the sliding surface (33) as the damping surface (32).

6. The rotation-resistance device of the main shaft drive in the machine tool according to Claim 1, wherein the damping device (10) includes a fluid pressure chamber (49), a resiliently deformable sliding disc (43), a piston (44), and a damping surface (48), the fluid pressure chamber (49) being formed at the frame body (2) in the vicinity of the rotating body (65), the sliding disc (43) serving as the damping member and being provided so as to be incapable of rotating relative to the rotating body (65), the piston (44) being provided between the fluid pressure chamber (49) and the sliding disc (43) so as to be movable in an axial direction of the rotating body (65), the damping surface (48) facing the sliding disc (43) and being formed at a side of the frame body (2) opposite to the piston (44),
wherein, when the pressing-force applying device (66) supplies the operating fluid into the fluid pressure chamber (49), pressure of operating fluid moves the piston (44) in the axial direction, and the piston (44) presses a sliding surface (55) at a side of the sliding disc (43) closer to the piston (44), and
wherein the sliding disc (43) is resiliently deformed by the pressing of the piston (44), so that a sliding surface (55) at a side of the sliding disc (43) closer to the damping surface (48) presses the damping surface (48).
